# EUROPÄISCHE PATENTSCHRIFT

(11) **EP 2 924 271 B1**
(45) Veröffentlichungstag und Bekanntmachung des Hinweises auf die Patenterteilung: **03.01.2018**
(21) Anmeldenummer: 15000205.3
(22) Anmeldetag: 23.01.2015
(51) Int. Cl.: F02M 26/19, F02M 21/02, B01F 5/00, B01F 5/06, B01F 3/02

(54) **Homogenisierungsvorrichtung für wenigstens zwei Fluidströme, insbesondere zur homogenen Gas-Luft-Vermischung bei einem Gasmotor**
Homogenising device for at least two fluid streams, in particular for homogeneous gas-air mixing in a gas engine
Dispositif d'homogénéisation pour au moins deux flux fluidiques, en particulier destiné au mélange homogène d'air et de gaz dans un moteur à gaz

(30) Priorität: 24.03.2014 DE 102014004133
(43) Veröffentlichungstag der Anmeldung: 30.09.2015
(73) Patentinhaber: MAN Truck & Bus AG, 80995 München (DE)
(72) Erfinder: Barciela, Bruno, 90489 Nürnberg (DE); Weiß, Joachim, 90522 Oberasbach (DE)
(74) Vertreter: Liebl, Thomas

(56) Entgegenhaltungen:
- EP-A2- 1 908 932
- CH-A- 168 826
- CH-A5- 580 442
- US-A- 4 126 425

## Beschreibung

Die Erfindung betrifft eine Homogenisierungsvorrichtung für wenigstens zwei Fluidströme, insbesondere zur homogenen Gas-Luft-Vermischung bei einem Gasmotor, nach dem Oberbegriff des Anspruchs 1.

Die allgemein bekannte grundsätzliche Anordnung einer solchen Homogenisierungsvorrichtung besteht aus einem zentralen Homogenisierungsraum als Mischbereich, an dem zwei, jeweils unterschiedliche Fluidströme führende Fluid-Zuführungsleitungen und eine das homogenisierte Fluid führende Fluid-Abströmleitung angeschlossen sind. Im Homogenisierungsraum soll eine möglichst intensive Vermischung der beiden Fluidströme stattfinden.

Dazu ist aus EP 1 908 932 A1 eine Abgasanlage für Dieselfahrzeuge bekannt mit einem ersten und zweiten, auslassseitig mit einer Brennkraftmaschine verbindbaren Parallelstrang, wobei diese mit ihren stromabwärts weisenden Enden mit einem SCR-Katalysator verbunden sind. An einem Parallelstrang ist eine Injektionseinrichtung für ein Reduktionsmittel vorgesehen. In einer dem Katalysator vorgeschalteten Homogenisierungsvorrichtung wird der mit dem Reduktionsmittel versetzte Abgasstrom mit dem reduktionsmittelfreien Abgasstrom vermischt. In einer Mischkammer werden hier zur Förderung der Durchmischung Leitbleche mit und ohne Lochstrukturen eingebaut und/oder die Abgasströme durch kurvige Kammer-Querschnittformen abgelenkt. Die Einrichtungen zur Förderung der Durchmischung sind hier der Mischkammer zugeordnet. Die hier verwendeten und weitere allgemein bekannte Maßnahmen zur Förderung einer Durchmischung, wie Leitbleche, Prallflächen, Lochbleche, Diffusoreinrichtungen, etc. führen zu einem meist unerwünscht ungünstigen, relativ hohen Druckverlust.

Die weitere Druckschrift US 4 126 425 A betrifft einen Gasmischer, bei dem an einem zentralen Homogenisierungsraum als Mischbereich zumindest zwei jeweils unterschiedliche Fluidströme führende Fluid-Zuführungsleitungen und eine das homogenisierte Fluid führende Fluid-Abströmleitung angeschlossen sind. Die Fluidströme werden dem Homogenisierungsraum dabei mit einer aufgezwungenen Drallbewegung zugeführt, so dass sich im Homogenisierungsraum eine rotierende, den Homogenisierungsprozess unterstützende Strömung ausbildet.

Aufgabe der Erfindung ist es, eine gattungsgemäße Homogenisierungsvorrichtung so weiterzubilden, dass eine intensive Durchmischung zweier Fluidströme bei möglichst geringem Druckverlust erreicht wird.

Diese Aufgabe wird gelöst mit den Merkmalen der unabhängigen Patentansprüche. Vorteilhafte Ausgestaltungen sind Gegenstand der darauf rückbezogenen Unteransprüche.

Gemäß Patentanspruch 1 wird eine Homogenisierungsvorrichtung für zumindest zwei Fluidströme, insbesondere zur homogenen Gas-Luft-Vermischung bei einem Gasmotor, vorgeschlagen, wobei an einem zentralen Homogenisierungsraum als Mischbereich zumindest zwei, jeweils unterschiedliche Fluidströme führende Fluid-Zuführungsleitungen und eine das homogenisierte Fluid führende Fluid-Abströmleitung angeschlossen sind, wobei die Fluid-Zuführungsleitungen im Anschlussbereich vor dem Homogenisierungsraum jeweils einen Leitungsabschnitt mit einer Strömungsumlenkung in eine Richtung mit stromab folgender Strömungsumlenkung in die andere Richtung aufweisen. Erfindungsgemäß ist vorgesehen, dass die Fluid-Zuführungsleitungen so angeschlossen sind, dass die Fluidströme dem Homogenisierungsraum tangential mit einer aufgezwungenen, vorzugsweise gegenflächigen Drallbewegung zugeführt werden, dergestalt, dass sich im Homogenisierungsraum eine rotierende, turbulente, den Homogenisierungsprozess unterstützende Strömung ausbildet. Zur durchmischungsfördernden Turbulenzgenerierung wird somit hier die Fluiddynamik der Fluidströme ausgenützt. Die eingangs erläuterten bekannten komplexen aufwendigen Maßnahmen mit Prallplatten, Lochstrukturen, komplizierten Kammerinnenflächen, etc. können erfindungsgemäß regelmäßig entfallen. Damit wird erfindungsgemäß eine effiziente Homogenisierung bei einem relativ geringen Druckverlust mit einer relativ einfachen und kostengünstigen Vorrichtung bei geringem Platzbedarf erreicht.

Weiter erfindungsgemäß spannen bei der Homogenisierungsvorrichtung in einer dreischenkeligen, Y-förmigen Fluid-Leitungsanordnung die Mittellinien der Fluid-Zuführungsleitungen und gegebenenfalls die Mittellinie der Fluid-Abströmleitung eine Referenzebene auf. Unmittelbar vor dem Homogenisierungsraum und vor der Zusammenführung der beiden zu mischenden Fluidströme weist eine erste der beiden Fluid-Zuführungsleitungen einen bezüglich der Referenzebene nach oben abknickenden Bogen und die andere zweite Fluid-Zuführungsleitung einen bezüglich der Referenzebene nach unten abknickenden Bogen sowie jeweils eine stromab darauffolgende Umlenkung in die andere Richtung auf. Durch diese Bogenführung in einem "S-Schlag" wird eine tangentiale Zusammenführung der beiden Fluidströme mit einer zusätzlich aufgezwungenen, die Durchmischung im Homogenisierungsraum fördernden, gegenläufigen Drallbewegung erreicht.

Die Bogenform kann je nach den Gegebenheiten etwa eine gestreckte Z-Form oder eine gestreckte S-Form sowie dazwischenliegende Übergangsformen aufweisen. Ein Bogen in Z-Form läuft stromab an der Einströmöffnung zum Homogenisierungsraum etwa parallel versetzt zur Referenzebene aus, so dass die beiden Einströmöffnungen der Fluid-Zuführungsleitungen bezüglich der Referenzebene zu beiden Seiten versetzt liegen. Bei einem Bogen in S-Form biegt dieser jeweils vor der zugeordneten Einströmöffnung zur Referenzebene hin wieder ab, so dass beide Einströmöffnungen in der Referenzebene oder nur geringfügig dazu gegeneinander versetzt liegen.

In einer konkreten ersten Ausführungsform ist der Homogenisierungsraum als Mischstrecke ausgebildet, wobei die beiden Fluid-Zuführungsleitungen am Mischstreckeneingang jeweils mit einem S-förmigen Bogen verdrillt übereinanderliegend angeordnet und angeschlossen sind. Diese Verdrillungsstruktur ist in der Mischstrecke in einer rohrförmigen Innenschraubstruktur als Innenschraubgewinde für eine weitere aufgezwungene Drallbewegung im zusammengeführten Fluid weitergeführt. Dadurch wird eine weitere intensive Durchmischung in der Mischstrecke mit relativ geringem Druckverlust gefördert. Die spiralförmige Stegstruktur des Innenschraubgewindes wird hier zur Drallerzeugung bei gleichzeitiger Weiterbewegung des Fluids in die Abströmrichtung verwendet.

Eine besonders effektive Durchmischung bei einem relativ geringen Druckverlust wird erreicht, wenn der Anstellwinkel des Innenschraubgewindes ebenso wie der Tangentialwinkel 15° bis 20° beträgt. Das Innenschraubgewinde der Mischstrecke soll dazu 2 bis 6 Schraubengänge, bevorzugt 3 Schraubengänge aufweisen.

Bei einer zweiten, gut funktionsfähigen Ausführungsform einer Homogenisierungsvorrichtung ist der Homogenisierungsraum als Mischkammer mit einem balligen Innenvolumen ausgebildet, das mit einem kreisrunden Querschnitt in die Fluid-Abströmleitung übergeht. Die beiden Fluid-Zuführungsleitungen sind mit einem Bogen in gestreckter Z-Form, nebeneinanderliegend und gegeneinander bezüglich der Referenzebene höhenersetzt an der Mischkammer angeschlossen. Dadurch wird eine tangentiale und höhenversetzte Zuführung der beiden Fluidströme mit zusätzlicher Aufprägung einer gegenläufigen Drallbewegung in die Mischkammer erreicht. Besonders gute Mischergebnisse mit geringen Druckverlusten werden erzielt, wenn der Tangentialwinkel 20° bis 30° beträgt. Zudem soll der Höhenversatz bezüglich der Referenzebene jeweils 10 mm bis 20 mm betragen.

Eine weitere dritte Ausführungsform ist ähnlich der zweiten Ausführungsform ausgebildet, wobei jedoch der ballige Innenraum der Mischkammer insgesamt kugelig mit einem weitgehend kreisrunden Querschnitt ausgebildet ist. Die beiden Fluid-Zuführungsleitungen sind hier bogenförmig dergestalt an der Mischkammer angeschlossen, dass eine tangentiale Zuführung der beiden Fluidströme mit keinem oder nur geringem Höhenversatz bezüglich der Referenzebene in die Mischkammer erfolgt. Auch bei der dritten Ausführungsform wird ein besonders gutes Mischergebnis mit relativ geringem Druckverlust erreicht, wenn der Tangentialwinkel 20° bis 30° beträgt.

Bei einer vierten gut funktionsfähigen Ausführungsform ist der Homogenisierungsraum als Mischkammer mit einem etwa elliptischen Querschnitt und einer abgeflachten Kammerform ausgebildet. Die beiden Fluid-Zuführungsleitungen sind jeweils mit einem Bogen an der Mischkammer angeschlossen dergestalt, dass die beiden Bögen mit einer Bogenkrümmung in einer Draufsicht auf die Mischkammer endseitig aufeinander zugerichtet sind, wobei die Bögen in dieser Draufsicht an der Mischkammer an gegenüberliegenden Einströmöffnungen angeschlossen sind. Zudem sind die beiden Bögen jeweils mit einer weiteren Bogenkrümmung bezüglich der Ebene der Abflachung gegenüberliegend höhenversetzt an der Mischkammer angeschlossen, so dass eine tangentiale höhenversetzte Zusammenführung der beiden Fluidströme mit aufgeprägter gegenläufiger Drallbewegung erfolgt. Der Tangentialwinkel soll hier 5° bis 15° betragen.

Durch eine Verengung der Austrittsfläche des Homogenisierungsraums, insbesondere als Einschnürung an der Fluid-Abströmleitung kann dort die Strömungsgeschwindigkeit erhöht werden, wodurch die Gleichverteilung der beiden zu mischenden Fluide begünstigt wird. Allerdings nimmt mit dieser Maßnahme auch der Druckverlust zu. Diese Maßnahme kann insbesondere bei den Ausführungsformen 2, 3 und 4 verwendet werden. Eine Verbesserung des Mischverhältnisses unter Vermeidung zu hoher Druckverluste wird damit insbesondere erreicht, wenn die lokale Verengung eines bestimmten Querschnitts der Fluid-Abströmleitung um einen Faktor 0,8 ± 0,1 kleiner als dieser Querschnitt ist.

Besonders bevorzugt wird eine der vorstehenden Homogenisierungsvorrichtungen als Bestandteil einer Ansauganlage eines Gasmotors vor einem Brennraum zur Vermischung von Brenngas und Luft verwendet.

Anhand einer Zeichnung werden Ausführungsformen der Erfindung näher erläutert.

Es zeigen:
- Fig. 1: Darstellungen einer ersten Ausführungsform, wobei Fig. 1a bis 1d, 1f Ansichten aus unterschiedlichen Richtungen und Fig. 1e und Fig. 1g Schnitte zeigen,
- Fig. 2: Darstellungen einer zweiten Ausführungsform, wobei Fig. 2a bis 2d, 2f Ansichten aus unterschiedlichen Richtungen und Fig. 2e und Fig. 2g Schnitte zeigen,
- Fig. 3: Darstellungen einer dritten Ausführungsform, wobei Fig. 3a bis 3d, 3f Ansichten aus unterschiedlichen Richtungen und Fig. 3e und Fig. 3g Schnitte zeigen, und
- Fig. 4: Darstellungen einer vierten Ausführungsform, wobei Fig. 4a bis 4d, 4f Ansichten aus unterschiedlichen Richtungen und Fig. 4e und Fig. 4g Schnitte zeigen.

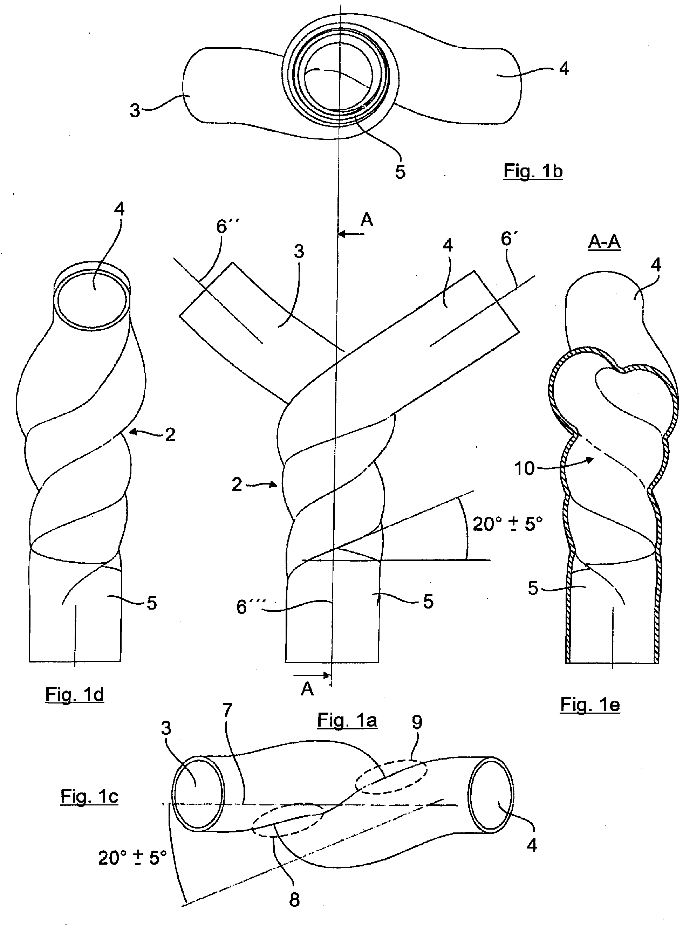

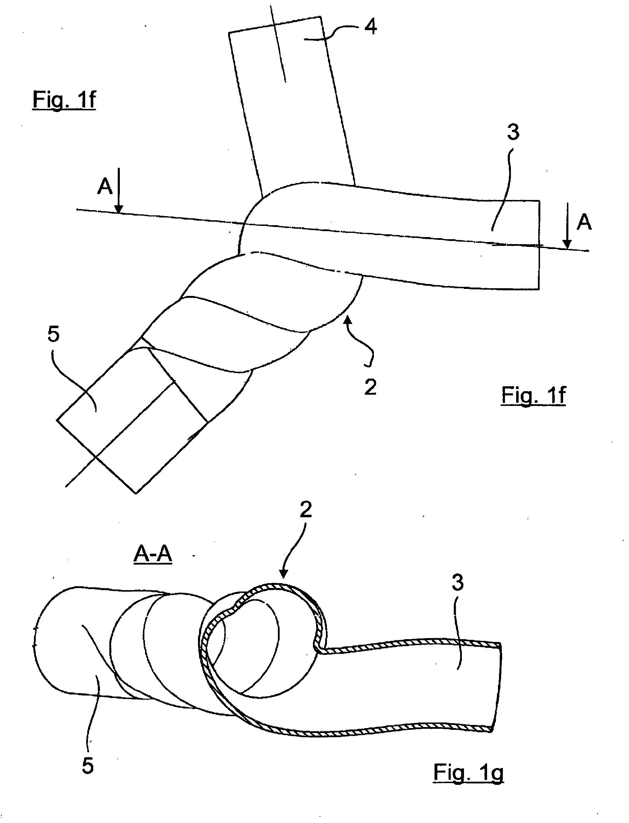

In Fig. 1 ist eine erste Ausführungsform einer Homogenisierungsvorrichtung 1 dargestellt. In der Draufsicht nach Fig. 1a ist eine dreischenkelige Fluidleitungsanordnung in Y-Form gezeigt mit einem zentralen Harmonisierungsraum als Mischstrecke 2, an die eingangsseitig eine erste Fluid-Zuführungsleitung 3 und eine zweite Fluid-Zuführungsleitung 4 sowie ausgangsseitig eine Fluid-Abströmleitung 5 angeschlossen sind. Insbesondere aus Fig. 1c mit einer Ansicht in Richtung auf die Fluid-Zuführungsleitungen 3, 4 ist ersichtlich, dass die Mittellinien 6', 6", 6''' eine Referenzebene 7 aufspannen, auf die die nachfolgend beschriebene Leitungsführung Bezug nimmt:

Die erste Fluid-Zuführungsleitung 3 weist unmittelbar vor der Mischstrecke 2 einen bezüglich der Referenzebene 7 nach oben abknickenden Bogen im Bereich 8 auf mit einer dann stromab darauffolgenden Umlenkung in die andere Richtung hinein in die Mischstrecke 2. Entsprechend weist die zweite Fluid-Zuführungsleitung 4 im Bereich 9 einen bezüglich der Referenzebene 7 nach unten abknickenden Bogen mit einer darauf stromab folgenden Umlenkung in die andere Richtung auf. Diese Bogenführungen der Fluid-Zuführungsleitungen 3, 4 sind auch deutlich aus Fig. 1b, einer Ansicht in Richtung der Fluid-Abströmleitung 5 erkennbar ebenso aus der Schnittdarstellung nach Fig. 1g. In Fig. 1c ist zudem der Tangentialwinkel mit 20° ± 5° eingezeichnet.

Die beiden Fluid-Zuführungsleitungen 3, 4 liegen gemäß Fig. 1c jeweils mit einem S-förmigen Bogenbereich verdrillt übereinander, wobei sich diese Verdrillungsstruktur in der Mischstrecke 2 in einer rohrförmigen Innenschraubstruktur als Innenschraubgewinde 10 mit drei Schraubengängen fortsetzt, wie aus dem Schnitt nach Fig. 1e ersichtlich.

Durch die gezeigte bogenförmige Ausbildung der Fluid-Zuführungsleitungen am bzw. vor dem Eingang der Mischstrecke 2 erfolgt eine tangentiale Zusammenführung der beiden darin strömenden Fluidströme mit einer zusätzlich aufgezwungenen, eine Durchmischung fördernde Drallbewegung. Diese Drallbewegung wird im spiralförmigen Innenschraubgewinde 10 für eine weitere intensive Durchmischung weitergeführt. Wesentlich ist somit die Schraubstruktur an der Innenwand der Mischstrecke 2. Aus den Ansichten der Fig. 1a, 1d und aus der Ansicht von unten nach Fig. 1f ist zu erkennen, dass die Mischstrecke 2 mit gleicher Wandstärke insgesamt und damit auch von außen her verdrillt ausgebildet ist. Dies kann insbesondere herstellungsbedingt bei einem Gieß- oder Prägeverfahren so ausgeführt sein. Für die Drallgebungsfunktion ist jedoch die Innenseiten-Schraubstruktur mit den drei Gewindegängen und dem Anstellwinkel des Schraubgewindes von 20° ± 5° wesentlich.

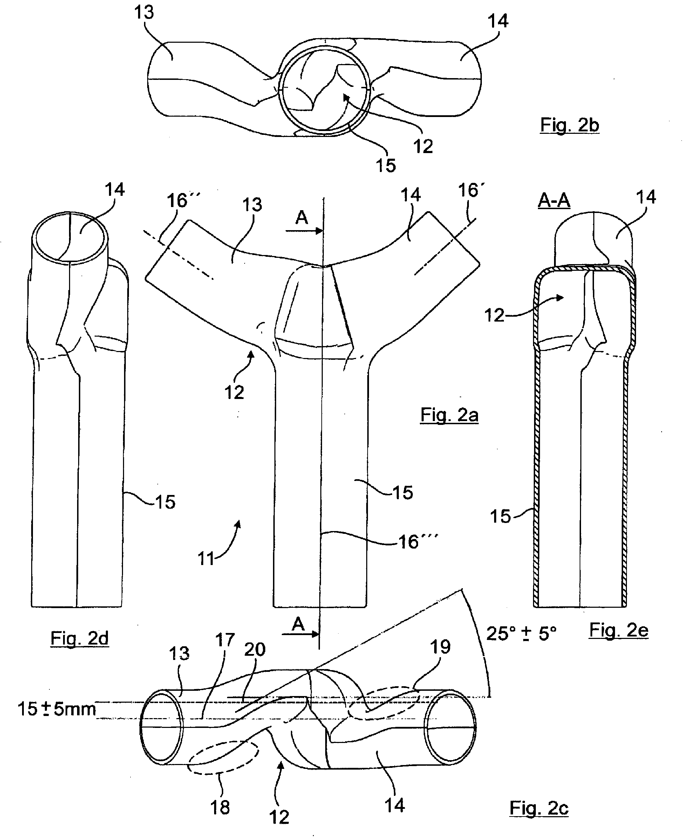

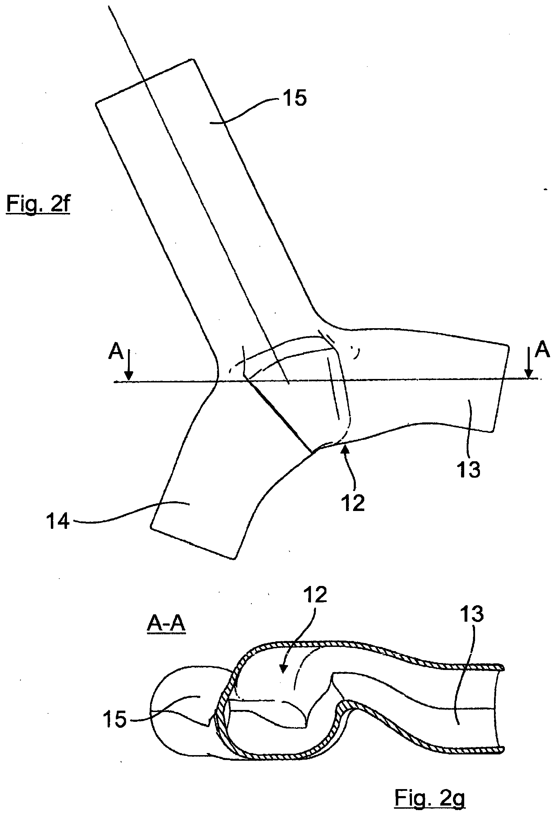

In Fig. 2 ist eine zweite Ausführungsform einer Homogenisierungsvorrichtung 11 dargestellt, wobei auch hier eine dreischenkelige Fluid-Leitungsanordnung in Y-Form vorliegt, und an einem zentralen Homogenisierungsraum als Mischkammer 12 eine erste Fluid-Zuführungsleitung 13 und eine zweite Fluid-Zuführungsleitung 14 sowie eine Fluid-Abströmleitung 15 angeschlossen sind. Die Mittellinien 16', 16" der Fluid-Zuführungsleitungen 13, 14 und die Mittellinie 16''' der Fluid-Abströmleitung 15 spannen eine Referenzebene 17 auf, auf die die bogenförmige Leitungsführung im Anschlussbereich Bezug nimmt:
Wie aus Fig. 2c ersichtlich, biegt die erste Fluid-Zuführungsleitung 13 (nach oben) bezüglich der Referenzebene 17 ab und verläuft weiter in einem gestreckten Z-Schlag in die andere Richtung, so dass die Mittellinie 20 an der Einströmöffnung der Mischkammer 12 um den eingezeichneten Abstand 15 mm ± 5 mm bezüglich der Referenzebene 17 versetzt liegt. Die zweite Fluid-Zuführungsleitung 14 ist wie ebenfalls aus Fig. 2c ersichtlich im Bereich 19 in die andere Richtung abknickend geführt und entsprechend mit einer Umlenkung in die andere Richtung für eine tangentiale und höhenversetzte Zuführung der beiden Fluidströme mit zusätzlicher Aufprägung einer gegenläufigen Drallbewegung an der Mischkammer angeschlossen. Der geeignete Tangentialwinkel ist hier mit 25° ± 5° eingezeichnet. Wie aus Fig. 2b in Verbindung mit dem Schnitt nach Fig. 2g ersichtlich ist, hat die Mischkammer 12 eine ballige, jedoch nicht kugelförmige Innenkontur, die aber mit einem kreisrunden Querschnitt in die Fluid-Abströmleitung 15 übergeht.

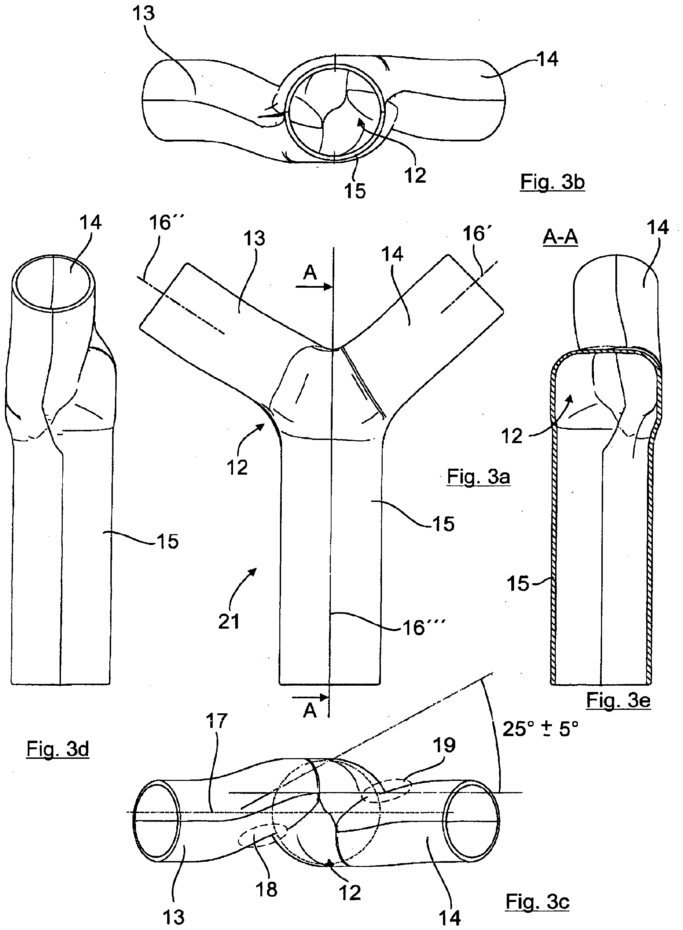

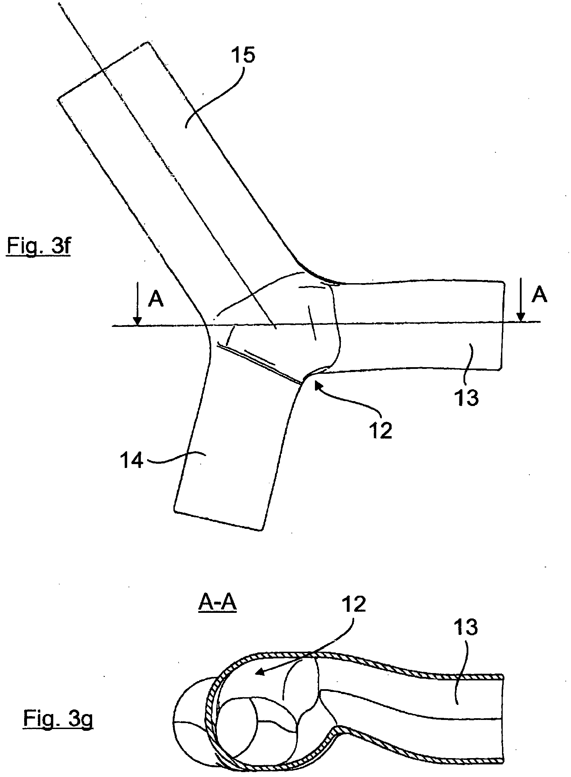

In Fig. 3 ist eine dritte Ausführungsform einer Homogenisierungsvorrichtung 21 dargestellt, die im Wesentlichen der zweiten Ausführungsform 11 nach Fig. 2 entspricht, so dass in Fig. 3 und den zugehörigen Einzeldarstellungen die gleichen Bezugszeichen verwendet sind und im folgenden nur die Unterschiede zur zweiten Ausführungsform erläutert werden: vergleichsweise ist bei der dritten Ausführungsform, wie insbesondere aus den Fig. 3b, 3c und 3g ersichtlich, die Abknickung weniger steil und der Innenraum der Mischkammer 12 ist insgesamt mehr kugelförmig mit einem weitgehend kreisrunden Querschnitt ausgeführt. Dadurch ist bei der dritten Ausführungsform in Fig. 3c eine Exzentrizität bzw. ein in Fig. 2c eingezeichneter Höhenversatz nicht oder nur gering vorhanden. Dies zeigt, dass insbesondere bei einer Variation der geometrischen Merkmale eine Anpassung an individuelle Gegebenheiten möglich ist.

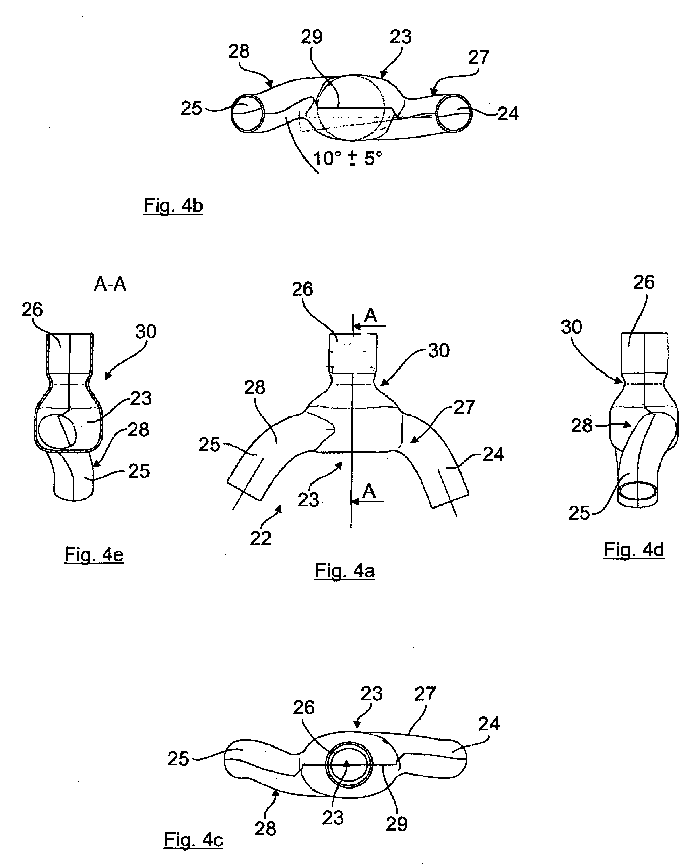

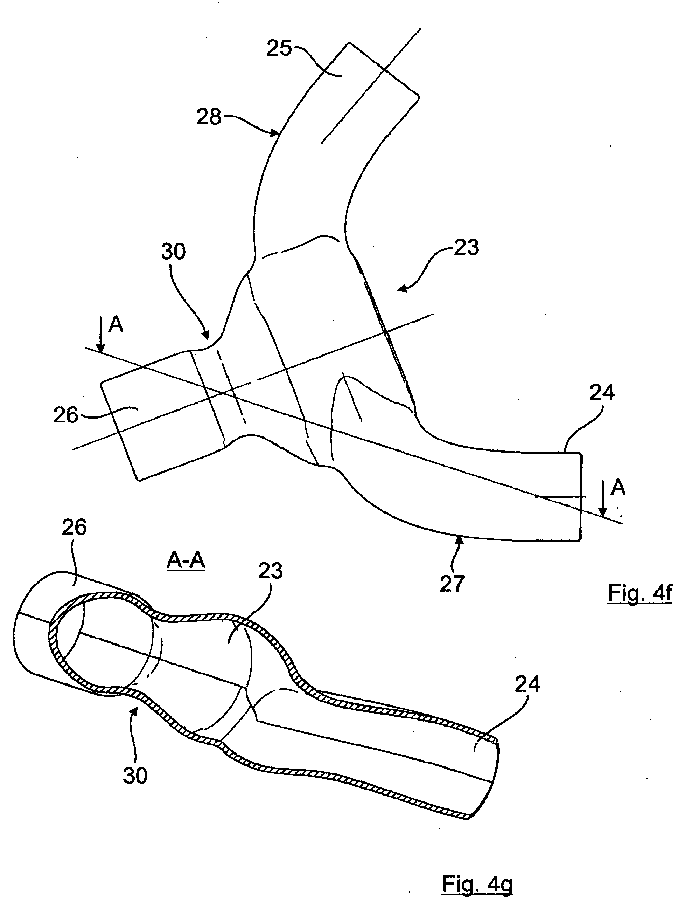

In Fig. 4 ist eine vierte Ausführungsform einer Homogenisierungsvorrichtung 22 dargestellt mit einer zentralen Mischkammer 23, an die eine erste Fluid-Zuführungsleitung 24 und eine zweite Fluid-Zuführungsleitung 25 sowie eine Fluid-Abströmleitung 26 in einer dreischenkeligen Leitungsanordnung angeschlossen sind. Die Mischkammer 23 ist als abgeflachte Dosenform mit einem etwa elliptischen Querschnitt ausgebildet. Die beiden Fluid-Zuführungsleitungen 24, 25 sind jeweils mit einem Bogen 27, 28 an der Mischkammer 23 angeschlossen. Wie insbesondere aus den Fig. 4a und 4f ersichtlich, sind die beiden Bögen 27, 28 in einer Draufsicht auf die Mischkammer 23 endseitig aufeinander zugerichtet, wobei die Bögen 27, 28 in dieser Draufsicht an der Mischkammer 23 an etwa gegenüberliegenden Einströmöffnungen angeschlossen sind.

Wie insbesondere aus den Fig. 4b bis 4c ersichtlich, sind beide Bögen jeweils mit einer weiteren Bogenkrümmung bezüglich der Mittenebene 29 der Abflachung bzw. des elliptischen Querschnitts höhenversetzt an der Mischkammer 23 angeschlossen. Die Bogenkrümmung knickt jeweils bezüglich der Mittenebene 29 nach oben bzw. nach unten ab mit einer anschließenden Umkehrung in die Mischkammer 23, so dass durch diese Bogenführungen eine tangentiale höhenversetzte Zusammenführung der beiden Fluidströme aus den Fluid-Zuführleitungen 24, 25 mit aufgeprägter gegenläufiger Drallbewegung erfolgt. Ein geeigneter Tagentialwinkel ist in Fig. 4b mit 10° ± 5° eingezeichnet.

Zudem ist hier am Ausgang der Mischkammer 23 gegenüber der anschließenden Fluid-Abströmleitung 26 eine lokale Verengung der Ausströmfläche als umlaufende Einschnürung 30 angebracht. Der Durchmesser ist hier um den Faktor 0,8 ± 0,1 kleiner als der Querschnitt der Fluid-Abströmleitung 26 und wird für eine durchmischungsfördernde lokale Erhöhung der Strömungsgeschwindigkeit verwendet.

### Bezugszeichen

- 1: Homogenisierungsvorrichtung, 1. Ausführungsform
- 2: Mischstrecke
- 3: erste Fluidzuführungsleitung
- 4: Zuführungsleitung
- 5: Fluid-Abströmleitung
- 6', 6", 6''': Mittellinien
- 7: Referenzebene
- 8: Bereich
- 9: Bereich
- 10: Innenschraubgewinde
- 11: Homogenisierungsvorrichtung, 2. Ausführungsform
- 12: Mischkammer
- 13: erste Fluidzuführungsleitung
- 14: zweite Fluidzuführungsleitung
- 15: Fluid-Abströmleitung
- 16', 16", 16''': Mittellinien
- 17: Referenzebene
- 18: Bereich
- 19: Bereich
- 20: Mittellinie
- 21: Homogenisierungsvorrichtung, 3. Ausführungsform
- 22: Homogenisierungsvorrichtung, 4. Ausführungsform
- 23: Mischkammer
- 24: erste Fluidzuführungsleitung
- 25: zweite Fluidzuführungsleitung
- 26: Fluid-Abströmleitung
- 27: Bogen
- 28: Bogen
- 29: Mittenebene
- 30: Einschnürung

## Patentansprüche

1. Homogenisierungsvorrichtung für zumindest zwei Fluidströme, insbesondere zur homogenen Gas-Luft-Vermischung bei einem Gasmotor,
wobei an einem zentralen Homogenisierungsraum (2; 12; 23) als Mischbereich zumindest zwei, jeweils unterschiedliche Fluidströme führende Fluid-Zuführungsleitungen (3, 4; 13, 14; 24, 25) und eine das homogenisierte Fluid führende Fluid-Abströmleitung (5; 15; 26) angeschlossen sind, wobei die Fluid-Zuführungsleitungen (3, 4; 13, 14; 24, 25) im Anschlussbereich vor dem Homogenisierungsraum (2; 12; 23) jeweils einen Leitungsabschnitt (8, 9; 18, 19; 27, 28) mit einer Strömungsumlenkung in eine Richtung mit stromab folgender Strömungsumlenkung in die andere Richtung aufweisen,
**dadurch gekennzeichnet,**
**dass** die Fluid-Zuführungsleitungen (3, 4; 13, 14; 24, 25) so angeschlossen sind, dass die Fluidströme dem Homogenisierungsraum (2; 12; 23) tangential mit einer aufgezwungenen Drallbewegung zugeführt werden dergestalt, dass sich im Homogenisierungsraum (2; 12; 23) eine rotierende, turbulente, den Homogenisierungsprozess unterstützende Strömung ausbildet,
**dass** in einer 3-schenkeligen, Y-förmigen Fluid-Leitungsanordnung die Mittellinien (6', 6"; 16', 16") der Fluid-Zuführungsleitungen (3, 4; 13, 14; 24, 25) eine Referenzebene (7; 17; 29) aufspannen, und
**dass** unmittelbar vor dem Homogenisierungsraum (2; 12; 23) und vor der Zusammenführung der beiden Fluidströme eine erste der beiden Fluid-Zuführungsleitungen (3; 13; 24) einen bezüglich der Referenzebene (7, 17, 29) abknickenden Bogen (8; 18; 27) und die andere zweite Fluid-Zuführungsleitung einen bezüglich der Referenzebene (7, 17, 29) zur anderen Seite hin abknickenden Bogen (9; 19; 27) mit einer jeweils dann stromab darauf folgenden Umlenkung in die andere Richtung aufweist, wobei durch diese Bogenführung eine tangentiale Zusammenführung der beiden Fluidströme mit einer zusätzlich aufgezwungenen, die Durchmischung im Homogenisierungsraum (2; 12; 23) fördernden gegenläufigen Drallbewegung erreicht wird.

2. Homogenisierungsvorrichtung nach Anspruch 1, **dadurch gekennzeichnet,**
**dass** in der 3-schenkeligen, Y-förmigen Fluid-Leitungsanordnung die Mittellinien (6', 6"; 16', 16") der Fluid-Zuführungsleitungen (3, 4; 13, 14; 24, 25) und die Mittellinie (6''', 16''') der Fluid-Abströmleitung (5; 15; 26) die Referenzebene (7; 17; 29) aufspannen.

3. Homogenisierungsvorrichtung nach Anspruch 1 oder 2, **dadurch gekennzeichnet,**
**dass** die Bogenform je eine gestreckte Z-Form oder gestreckte S-Form aufweist, so dass der Bogen in der Z-Form an der zugeordneten Einströmöffnung etwa parallel versetzt zur Referenzebene (7, 17, 29) ausläuft und die beiden zugeordneten Einströmöffnungen am Homogenisierungsraum (2; 12; 23) bezüglich der Referenzebene (7, 17, 29) zu beiden Seiten versetzt liegen, und/oder
**dass** der Bogen in S-Form jeweils vor der zugeordneten Einströmöffnung zur Referenzebene (7, 17, 29) hin abbiegend ausläuft.

4. Homogenisierungsvorrichtung nach einem der vorhergehenden Ansprüche, **dadurch gekennzeichnet,**
**dass** der Homogenisierungsraum als Mischstrecke (2) ausgebildet ist,
**dass** die beiden Fluid-Zuführungsleitungen (3, 4) am Mischstreckeneingang jeweils mit einem S-förmigen Bogen verdrillt übereinanderliegend angeordnet und angeschlossen sind, und
**dass** die Verdrillungsstruktur in der Mischstrecke (2) in einer rohrförmigen Innenschraubstruktur als Innenschraubgewinde (10) für eine weitere aufgezwungene Drallbewegung im zusammengeführten Fluid weitergeführt ist.

5. Homogenisierungsvorrichtung nach Anspruch 4, **dadurch gekennzeichnet, dass** der Anstellwinkel des Innenschraubgewindes (10) ebenso wie der Tangentialwinkel 15° bis 20° beträgt.

6. Homogenisierungsvorrichtung nach Anspruch 4 oder Anspruch 5, **dadurch gekennzeichnet, dass** das Innenschraubgewinde (10) mehrere Schraubengänge, insbesondere 2 bis 6 Schraubengänge, bevorzugt 3 Schraubengänge aufweist.

7. Homogenisierungsvorrichtung nach einem der Ansprüche 1 bis 3, **dadurch gekennzeichnet,**
**dass** der Homogenisierungsraum als Mischkammer (12) mit einem balligen Innenvolumen ausgebildet ist, das mit einem kreisrunden Querschnitt in die Fluid-Abströmleitung (15) übergeht, und
**dass** die beiden Fluid-Zuführungsleitungen (13, 14) mit einem Bogen (Bereiche 18, 19) in gestreckter Z-Form, nebeneinanderliegend und gegeneinander bezüglich der Referenzebene (17) höhenversetzt an der Mischkammer (12) angeschlossen sind für eine tangentiale und höhenversetzte Zuführung der beiden Fluidströme mit zusätzlicher Aufprägung einer gegenläufigen Drallbewegung.

8. Homogenisierungsvorrichtung nach Anspruch 7, **dadurch gekennzeichnet, dass** der Höhenversatz der Mitten der Einströmöffnungen der Fluid-Zuführungsleitungen (13, 14) bezüglich der Referenzebene (17) jeweils 10mm bis 20mm beträgt.

9. Homogenisierungsvorrichtung nach einem der Ansprüche 1 bis 3, **dadurch gekennzeichnet,**
**dass** der Homogenisierungsraum als Mischkammer (12) ausgebildet ist mit einem balligen, kugelförmigen Innenraum mit einem insgesamt weitgehend kreisrunden Querschnitt der in die Fluid-Abströmleitung (15) übergeht, und
**dass** die beiden Fluid-Zuführungsleitungen (13, 14) bogenförmig dergestalt an der Mischkammer (12) angeschlossen sind, dass eine tangentiale Zuführung der beiden Fluidströme mit keinem oder nur geringem Höhenversatz bezüglich der Referenzebene (17) in die Mischkammer (12) erfolgt.

10. Homogenisierungsvorrichtung nach einem der Ansprüche 7 bis 9, **dadurch gekennzeichnet, dass** der Tangentialwinkel 20° bis 30° beträgt.

11. Homogenisierungsvorrichtung nach einem der Ansprüche 1 bis 3, **dadurch gekennzeichnet,**
**dass** der Homogenisierungsraum als Mischkammer (23) mit einem etwa elliptischen Querschnitt und einer abgeflachten Kammerform ausgebildet ist,
**dass** die beiden Fluid-Zuführungsleitungen (24, 25) jeweils mit einem Bogen (27, 28) an der Mischkammer (23) angeschlossen sind, wobei die beiden Bögen (27, 28) mit einer Bogenkrümmung in einer Draufsicht auf die Mischkammer (23) endseitig aufeinander zugerichtet sind, wobei die Bögen (27, 28) in dieser Draufsicht an der Mischkammer (23) an gegenüberliegenden Einströmöffnungen angeschlossen sind, und
**dass** die beiden Bögen (27, 28) jeweils mit einer weiteren Bogenkrümmung bezüglich der Mittenebene (29) der Abflachung gegenüberliegend höhenversetzt an der Mischkammer (23) angeschlossen sind, so dass eine tangentiale höhenversetzte Zusammenführung der beiden Fluidströme mit aufgeprägter gegenläufiger Drallbewegung erfolgt.

12. Homogenisierungsvorrichtung nach Anspruch 11, **dadurch gekennzeichnet, dass** der Tangentialwinkel 5° bis 15° beträgt.

13. Homogenisierungsvorrichtung nach einem der Ansprüche 4 bis 12, **dadurch gekennzeichnet, dass** am Ausgang des Homogenisierungsraums bezüglich der fluid-Abströmleitung (26) eine lokale Verengung (30) der Ausströmfläche angebracht ist.

14. Homogenisierungsvorrichtung nach Anspruch 13, **dadurch gekennzeichnet, dass** die lokale Verengung (30) um einen Faktor 0,8 ± 0,1 kleiner als der Querschnitt der Fluid-Abströmleitung (26) ist.

15. Homogenisierungsvorrichtung nach einem der Ansprüche 1 bis 14, **dadurch gekennzeichnet, dass** die Homogenisierungsvorrichtung (1; 11; 21; 22) Bestandteil einer Ansauganlage eines Gasmotors vor einem Brennraum zur Vermischung von Brenngas und Luft ist.

16. Fahrzeug, insbesondere Nutzfahrzeug, mit einer Homogenisierungsvorrichtung nach einem der vorhergehenden Ansprüche.

## Claims

1. Homogenization apparatus for at least two fluid flows, in particular for homogeneous gas/air mixing in a gas engine, at least two fluid feed lines (3, 4; 13, 14; 24, 25) which in each case conduct different fluid flows and one fluid outflow line (5; 15; 26) which conducts the homogenized fluid being connected to a central homogenization space (2; 12; 23) as mixing region, wherein, in the connection region upstream of the homogenization space (2; 12; 23), the fluid feed lines (3, 4; 13, 14; 24, 25) have in each case one line section (8, 9; 18, 19; 27, 28) with a flow deflection in one direction with a flow deflection which follows downstream in the other direction,
**characterized in**
**that** the fluid feed lines (3, 4; 13, 14; 24, 25) are connected in such a way that the fluid flows are fed tangentially to the homogenization space (2; 12; 23) with a swirl movement imparted to them, in such a way that a rotating, turbulent flow which assists the homogenization process is formed in the homogenization space (2; 12; 23), in that, in a three-limb, Y-shaped fluid line arrangement, the centre lines (6', 6"; 16', 16") of the fluid feed lines (3, 4; 13, 14; 24, 25) define a reference plane (7; 17; 29), and in that, directly upstream of the homogenization space (2; 12; 23) and upstream of the combining point of the two fluid flows, a first of the two fluid feed lines (3; 13; 24) has an elbow (8; 18; 27) which bends away with regard to the reference plane (7, 17, 29) and the other second fluid feed line has an elbow (9; 19; 27) which bends away towards the other side with regard to the reference plane (7, 17, 29) with a deflection which then follows downstream thereof in each case in the other direction, a tangential combination of the two fluid flows with an additionally imparted swirl movement in opposite directions which promotes the thorough mixing in the homogenization space (2; 12; 23) being achieved by way of said elbow guidance.

2. Homogenization apparatus according to Claim 1, **characterized in that**, in the three-limb, Y-shaped fluid line arrangement, the centre lines (6', 6"; 16', 16") of the fluid feed lines (3, 4; 13, 14; 24, 25) and the centre line (6''', 16''') of the fluid outflow line (5; 15; 26) define the reference plane (7; 17; 29).

3. Homogenization apparatus according to Claim 1 or 2, **characterized in that** the elbow shape has in each case an elongate Z-shape or elongate S-shape, with the result that the elbow in the Z-shape straightens out at the associated inflow opening offset approximately parallel to the reference plane (7, 17, 29) and the two associated inflow openings lie offset on both sides with regard to the reference plane (7, 17, 29) at the homogenization space (2; 12; 23), and/or **in that** the elbow in the S-shape straightens out in each case upstream of the associated inflow opening such that it bends away towards the reference plane (7, 17, 29).

4. Homogenization apparatus according to one of the preceding claims, **characterized in that** the homogenization space is configured as a mixing section (2), **in that** the two fluid feed lines (3, 4) are arranged and connected at the mixing section inlet such that they lie above one another in each case in a twisted manner with an S-shaped elbow, and **in that** the twisting structure is continued in the mixing section (2) in a tubular internal screw structure as internal screw thread (10) for a further imparted swirl movement in the combined fluid.

5. Homogenization apparatus according to Claim 4, **characterized in that** the approach angle of the internal screw thread (10), just like the tangential angle, is from 15° to 20°.

6. Homogenization apparatus according to Claim 4 or Claim 5, **characterized in that** the internal screw thread (10) has a plurality of screw turns, in particular from 2 to 6 screw turns, preferably 3 screw turns.

7. Homogenization apparatus according to one of Claims 1 to 3, **characterized in that** the homogenization space is configured as a mixing chamber (12) with a domed internal volume which merges with a circular cross section into the fluid outflow line (15), and **in that** the two fluid feed lines (13, 14) are connected to the mixing chamber (12) with an elbow (regions 18, 19) in an elongate Z-shape, so as to lie next to one another and offset vertically with respect to one another with regard to the reference plane (17) for a tangential and vertically offset feed of the two fluid flows with additional imparting of a swirl movement in opposite directions.

8. Homogenization apparatus according to Claim 7, **characterized in that** the vertical offset of the centres of the inflow openings of the fluid feed lines (13, 14) is in each case from 10 mm to 20 mm with regard to the reference plane (17).

9. Homogenization apparatus according to one of Claims 1 to 3, **characterized in that** the homogenization space is configured as a mixing chamber (12) with a domed, spherical interior with a cross section which is largely circular overall and merges into the fluid outflow line (15), and **in that** the two fluid feed lines (13, 14) are connected in an elbow shape to the mixing chamber (12) in such a way that tangential feeding of the two fluid flows takes place into the mixing chamber (12) with no or only a small vertical offset with regard to the reference plane (17).

10. Homogenization apparatus according to one of Claims 7 to 9, **characterized in that** the tangential angle is from 20° to 30°.

11. Homogenization apparatus according to one of Claims 1 to 3, **characterized in that** the homogenization space is configured as a mixing chamber (23) with an approximately elliptical cross section and a flattened chamber shape, **in that** the two fluid feed lines (24, 25) are connected in each case by way of an elbow (27, 28) to the mixing chamber (23), the two elbows (27, 28) being directed towards one another on the end side with an elbow curvature in a plan view of the mixing chamber (23), the elbows (27, 28) being connected in said plan view to the mixing chamber (23) at inflow openings which lie opposite one another, and **in that** the two elbows (27, 28) are connected in each case to the mixing chamber (23) with a further elbow curvature with regard to the centre plane (29) so as to be offset vertically and lie opposite the flattened portion, with the result that a tangential vertically offset combination of the two fluid flows takes place with an imparted swirl movement in opposite directions.

12. Homogenization apparatus according to Claim 11, **characterized in that** the tangential angle is from 5° to 15°.

13. Homogenization apparatus according to one of Claims 4 to 12, **characterized in that** a local constriction (30) of the outflow area is introduced with regard to the fluid outflow line (26) at the outlet of the homogenization space.

14. Homogenization apparatus according to Claim 13, **characterized in that** the local constriction (30) is smaller than the cross section of the fluid outflow line (26) by a factor of 0.8 ± 0.1.

15. Homogenization apparatus according to one of Claims 1 to 14, **characterized in that** the homogenization apparatus (1; 11; 21; 22) is a constituent part for mixing combustion gas and air of an intake system of a gas engine upstream of the combustion chamber.

16. Vehicle, in particular commercial vehicle, having a homogenization apparatus according to one of the preceding claims.

## Revendications

1. Dispositif d'homogénéisation pour au moins deux flux fluidiques, en particulier destiné au mélange homogène d'air et de gaz dans un moteur à gaz,
dans lequel au moins deux conduites d'arrivée de fluide (3, 4; 13, 14; 24, 25) transportant respectivement des flux fluidiques différents et une conduite de départ de fluide (5; 15; 26) transportant le fluide homogénéisé sont raccordées à une chambre centrale d'homogénéisation (2; 12; 23) formant une zone de mélange, dans lequel les conduites d'arrivée de fluide (3, 4; 13, 14; 24, 25) présentent dans la zone de raccordement avant la chambre d'homogénéisation (2; 12; 23) respectivement une partie de conduite (8, 9; 18, 19; 27, 28) avec une déviation d'écoulement dans une direction suivie en aval par une déviation d'écoulement dans l'autre direction,
**caractérisé en ce que**
les conduites d'arrivée de fluide (3, 4; 13, 14; 24, 25) sont raccordées de telle manière que les flux fluidiques soient envoyés tangentiellement à la chambre d'homogénéisation (2; 12; 23) avec un mouvement giratoire forcé, de telle manière qu'il se produise dans la chambre d'homogénéisation (2; 12; 23) un écoulement tournant, turbulent, renforçant le processus d'homogénéisation,
dans un agencement à trois branches de conduites de fluide en forme de Y, les lignes centrales (6', 6"; 16', 16") des conduites d'arrivée de fluide (3, 4; 13, 14; 24, 25) définissent un plan de référence (7; 17; 29), et
immédiatement avant la chambre d'homogénéisation (2; 12; 23) et avant la jonction des deux flux fluidiques, une première des deux conduites d'arrivée de fluide (3; 13; 24) présente un coude (8; 18; 27) s'écartant par rapport au plan de référence (7, 17, 29) et l'autre deuxième conduite d'arrivée de fluide présente un coude (9; 19; 27) s'écartant vers l'autre côté par rapport au plan de référence (7, 17, 29) suivis respectivement en aval par une déviation dans l'autre direction, dans lequel on obtient par ce guidage coudé une jonction tangentielle des deux flux fluidiques avec en plus un mouvement giratoire forcé de sens opposés, favorisant le mélange intime dans la chambre d'homogénéisation (2; 12; 23).

2. Dispositif d'homogénéisation selon la revendication 1, **caractérisé en ce que** dans l'agencement à trois branches de conduites de fluide en forme de Y, les lignes centrales (6', 6"; 16', 16") des conduites d'arrivée de fluide (3, 4; 13, 14; 24, 25) et la ligne centrale (6''', 16''') de la conduite de départ de fluide (5; 15; 26) définissent le plan de référence (7; 17; 29).

3. Dispositif d'homogénéisation selon la revendication 1 ou 2, **caractérisé en ce que** la forme coudée présente chaque fois une forme de Z étiré ou une forme de S étiré, de telle manière que le coude dans la forme de Z se termine à l'ouverture d'entrée associée en décalage sensiblement parallèle par rapport au plan de référence (7, 17, 29) et que les deux ouvertures d'entrée associées à la chambre d'homogénéisation (2; 12; 23) soient décalées vers les deux côtés par rapport au plan de référence (7, 17, 29), et/ou **en ce que** le coude dans la forme de S se termine respectivement en courbe vers le plan de référence (7, 17, 29) avant l'ouverture d'entrée associée.

4. Dispositif d'homogénéisation selon l'une quelconque des revendications précédentes, **caractérisé en ce que** la chambre d'homogénéisation est réalisée sous forme de zone de mélange (2), **en ce que** les deux conduites d'arrivée de fluide (3, 4) sont disposées sous forme torsadée l'une sur l'autre et sont raccordées à l'entrée de la zone de mélange chacune avec un coude en forme de S, et **en ce que** la structure de torsion dans la zone de mélange (2) est prolongée en une structure hélicoïdale intérieure de forme tubulaire en tant que filet hélicoïdal intérieur (10) pour un autre mouvement de giration forcé dans le fluide réuni.

5. Dispositif d'homogénéisation selon la revendication 4, **caractérisé en ce que** l'angle de pente du filet hélicoïdal intérieur (10) ainsi que l'angle tangentiel vaut 15° à 20°.

6. Dispositif d'homogénéisation selon la revendication 4 ou la revendication 5, **caractérisé en ce que** le filet hélicoïdal intérieur (10) présente plusieurs hélices, en particulier 2 à 6 hélices, de préférence 3 hélices.

7. Dispositif d'homogénéisation selon l'une quelconque des revendications 1 à 3, **caractérisé en ce que**
la chambre d'homogénéisation est réalisée sous forme de chambre de mélange (12) avec un volume intérieur bombé, qui se prolonge avec une section transversale ronde dans la conduite de départ de fluide (15), et
les deux conduites d'arrivée de fluide (13, 14) sont raccordées à la chambre de mélange (12) avec un coude (zones 18, 19) en forme de Z étiré, en étant placées l'une à côté de l'autre et décalées en hauteur par rapport au plan de référence (17), pour une arrivée tangentielle et décalée en hauteur des deux flux fluidiques avec application supplémentaire d'un mouvement de giration de sens opposé.

8. Dispositif d'homogénéisation selon la revendication 7, **caractérisé en ce que** le décalage en hauteur des centres des ouvertures d'entrée des conduites d'arrivée de fluide (13, 14) par rapport au plan de référence (17) vaut respectivement 10 mm à 20 mm.

9. Dispositif d'homogénéisation selon l'une quelconque des revendications 1 à 3, **caractérisé en ce que**
la chambre d'homogénéisation est réalisée sous forme de chambre de mélange (12) avec un espace intérieur bombé sphérique avec une section transversale globalement largement circulaire, qui se prolonge dans la conduite de départ de fluide (15), et
les deux conduites d'arrivée de fluide (13, 14) sont raccordées sous forme coudée à la chambre de mélange (12), de telle manière qu'une arrivée tangentielle des deux flux fluidiques dans la chambre de mélange (12) ne se produise qu'avec un décalage en hauteur nul ou faible par rapport au plan de référence (17).

10. Dispositif d'homogénéisation selon l'une quelconque des revendications 7 à 9, **caractérisé en ce que** l'angle tangentiel vaut 20° à 30°.

11. Dispositif d'homogénéisation selon l'une quelconque des revendications 1 à 3, **caractérisé en ce que**
la chambre d'homogénéisation est réalisée sous forme de chambre de mélange (23) avec une section transversale elliptique et une forme de chambre aplatie,
les deux conduites d'arrivée de fluide (24, 25) sont raccordées à la chambre de mélange (23) respectivement avec un coude (27, 28), dans lequel les deux coudes (27, 28) sont arrangés l'un sur l'autre en extrémité avec une courbure de coude dans une vue en plan sur la chambre de mélange (23), dans lequel les coudes (27, 28) dans cette vue en plan sont raccordés à la chambre de mélange (23) à des ouvertures d'entrée opposées l'une à l'autre, et
les deux coudes (27, 28) sont raccordés à la chambre de mélange (23) respectivement avec une autre courbure de coude par rapport au plan médian (29) avec décalage en hauteur en face du méplat, de telle manière qu'une réunion tangentielle décalée en hauteur des deux flux fluidiques se produise avec un mouvement de giration marqué en sens opposé.

12. Dispositif d'homogénéisation selon la revendication 11, **caractérisé en ce que** l'angle tangentiel vaut 5° à 15°.

13. Dispositif d'homogénéisation selon l'une quelconque des revendications 4 à 12, **caractérisé en ce qu'**un étranglement local (30) de la face de sortie est pratiqué à la sortie de la chambre d'homogénéisation par rapport à la conduite de départ de fluide (26).

14. Dispositif d'homogénéisation selon la revendication 13, **caractérisé en ce que** l'étranglement local (30) est inférieur d'un facteur 0,8 ± 0,1 à la section transversale de la conduite de départ de fluide (26).

15. Dispositif d'homogénéisation selon l'une quelconque des revendications 1 à 14, **caractérisé en ce que** le dispositif d'homogénéisation (1; 11; 21; 22) fait partie d'une installation d'aspiration d'un moteur à gaz avant une chambre de combustion en vue de mélanger du gaz combustible et de l'air.

16. Véhicule, en particulier véhicule utilitaire, avec un dispositif d'homogénéisation selon l'une quelconque des revendications précédentes.
